# EUROPEAN PATENT SPECIFICATION

(11) **EP 3 796 494 B1**
(45) Date of publication and mention of the grant of the patent: **14.01.2026**
(21) Application number: 20197792.3
(22) Date of filing: 23.09.2020
(51) Int. Cl.: H02G 1/10, H02G 1/08, E02B 17/00, F16L 1/235, H02G 9/02

(54) **ASSEMBLY AND METHOD FOR RECOVERING CABLES FROM A SEABED.**
ANORDNUNG UND VERFAHREN ZUR KABELBERGUNG VOM MEERESBODEN.
DISPOSITIF ET MÉTHODE DE RÉCUPÉRATION DE CÂBLES SUR UN FOND MARIN.

(30) Priority: 23.09.2019 IT 201900017024
(43) Date of publication of application: 24.03.2021
(73) Proprietor: Innovo Engineering and Construction LTD, Aberdeen, Scotland AB10 1JB (GB)
(72) Inventor: TIBERIO, Andrea, I-35020 Albignasego (PD) (IT); MALAGODI, Stefano, I-25019 Sirmione (BS) (IT)
(74) Representative: Gallo, Luca

(56) References cited:
- EP-A1- 2 597 738
- EP-A1- 2 696 123
- WO-A1-2011/141494
- US-A- 5 482 227

## Description

### Field of application

The present invention regards an assembly for recovering cables from seabeds according to independent claim 1.

The assembly of the present invention fall within the industrial field of production of offshore equipment and are intended for a use in the field of recovery of electrical cables that lie on beds of seas, lakes, basins, etc.

More in detail, the assembly that is the object of the present invention is intended to be installed at an offshore wind turbine and is intended to be employed for recovering electrical cables from the marine seabed at the wind turbine itself, for the purpose of connecting the wind turbine to an electrical energy transmission grid.

The invention is therefore inserted in the context of the industrial field of production of offshore equipment for the production of electrical energy.

### State of the art

As is known, wind turbines for the conversion of the kinetic energy of the wind into electrical energy can be installed both on dry land and at sea. The latter are generally known as offshore wind turbines and are installed on foundation platforms, which are fixed to the marine seabed and are provided with a base plane placed above the level of the sea and from which a support pole of the wind turbine itself is elevated.

In order to transmit the electrical energy produced by the wind turbine, each turbine is connected to a power grid by means of electrical cables installed on the marine seabed.

Each foundation platform is provided with a duct substantially shaped in the form of a "J" and containing a section of the electrical cables which connect the wind turbine to the power grid. More in detail, such J-shaped duct is extended vertically from the base plane of the foundation platform up to the marine seabed, with the curved section of the J that lies on the seabed in order to act as a protection of the curve that the electrical cable follows between the horizontal section, installed on the marine seabed, and the vertical section, which reaches the base plane of the foundation platform.

In the step of installation of the electrical turbine, before mounting the support pole of the turbine on the foundation platform, the recovery of the electrical cables from the seabed is executed. Such recovery provides for unloading specialized personnel on the foundation platform together with equipment for executing the recovery of the cables, and such equipment generally comprises at least one crane.

Subsequently, a recovery line associated with the crane is fit within the J-shaped duct up to reaching the marine seabed, where a scuba diver (or an underwater vehicle) connects the recovery line to the electrical cable. Then, a winding device of the crane recovers the recovery line and the electrical cable connected thereto up to bringing the end portion of the electrical cable on the base plane of the foundation platform.

The methods for recovering cables from seabeds by means of the equipment of known type briefly described up to now have in practice shown that they do not lack drawbacks.

The main drawback lies in the fact that the aforesaid equipment, in order to execute the recovery of the cables is particularly bulky and its operations of unloading on the foundation platform are particularly complex and dangerous for the safety of the personnel which executes such operations.

In addition, the unloading operations are further complicated by the fact that the offshore wind turbines are usually installed in marine areas where the waters are rather agitated due to the strong winds that the turbines are intended to exploit for generating electrical energy.

A further drawback of the methods for recovering electrical cables by means of the equipment of known type described above lies in the fact that, due to the complexity of the unloading operations, such methods are particularly long and costly to be implemented.

In addition, the cranes of the equipment for executing the recovery of the cables of known type are rather costly. Therefore, the methods for recovering electrical cables of known type also provide for a step of disassembly of the equipment for executing the recovery of the cables, and such disassembly step has all the drawbacks mentioned above in relation to the unloading operations. Of course, such disassembly step is complex and dangerous for the personnel which execute it, and also requires lengthy execution times and is expensive.

From documents EP 2696123, WO 2016/092260, WO 2011/141494 and EP 2597738, methods are also known for recovering electrical cables which do not provide for using cranes or other bulky devices.

In particular, from the documents EP 2696123, WO 2011/141494 and EP 2597738, it is known to arrange the electrical cables to be recovered within flexible ducts, and subsequently recover the flexible duct with the cable housed at its interior, for example by means of recovery means arranged on boats on which also the electrical cable and the flexible duct are on board (as described in EP 2696123 and in EP 2597738), or by means of floating means fixed to the duct (as described in WO 2011/141494).

In practice, the aforesaid flexible ducts have proven unsuitable for correctly protecting the electrical cable, since they tend to be bent (for example if subjected to marine currents), also bending the electrical cable at their interior and risking ruining it.

In addition, the document WO 2016/092260 provides for recovering the electrical cable directly within the foundation platform, without any type of duct placed to protect such electrical cable. Also such solution has proven unsuitable for recovering the electrical cable in safe conditions, since it exposes the electrical cable to inevitable risks of damage, not only during recovery but also during the entire useful lifetime of the electrical cable itself.

Moreover, document US 5,482,227 describes a device for coupling gas/oil pipes at the bottom of offshore platforms. In detail, the device comprises a curved duct extending form the upper base of the platform to the base thereof, and a pull wire inserted in the curved duct and intended to be connected to the pipe to couple. The device further comprises a winch, which is placed on the upper base of the platform above the upper mouth of the curved tube, and is aimed to wind the pull wire to move the pipe towards the platform base.

Therefore, at present there is the particular need for an assembly for recovering electrical cables from seabeds that allows executing the operations of recovery in conditions of complete safety, not only for the personnel which must execute such operations but also for the electrical cable that must be recovered.

### Presentation of the invention

In this situation, the problem underlying the present invention is therefore that of overcoming the drawbacks manifested by the equipment for recovering electrical cables from the marine seabeds of known type and the operating method thereof, by providing an assembly for recovering cables from seabeds and a method for recovering cables from seabeds by means of such assembly which allow executing the operations of recovery of the electrical cables that lie on seabeds in a manner that is completely safe for the employed personnel.

A further object of the present invention is to provide an assembly for recovering cables from seabeds and a method for recovering cables from seabeds which allow executing the operations of recovery of the electrical cables in relatively quick times and with relatively limited costs.

A further object of the present invention is to provide an assembly for recovering cables from seabeds which has relatively limited bulk.

A further object of the present invention is to provide an assembly for recovering cables from seabeds which is simple to use.

### Brief description of the drawings

The technical characteristics of the invention, according to the aforesaid objects, are clearly visible from the contents of the below-reported claims and the advantages thereof will be more evident in the following detailed description, made with reference to the enclosed drawings, which represent a merely exemplifying and non-limiting embodiment of the invention, in which:
- Figs. 1-4 show different operations of a step of installation at sea of the assembly for recovering cables from seabeds, object of the present invention, in accordance with a first embodiment of the aforesaid assembly;
- Figs. 5-8 show different operations of a step of installation at sea of the assembly for recovering cables from seabeds, in accordance with a second embodiment of the aforesaid assembly, which is not according to the invention and is present for illustration purposes only;
- Fig. 9 shows a perspective view of the first embodiment of the assembly for recovering cables from seabeds, object of the present invention;
- Fig. 10 shows a perspective view of a guide device arranged in the second embodiment of the assembly for recovering cables from seabeds; The second embodiment is not according to the invention and is present for illustration purposes only;

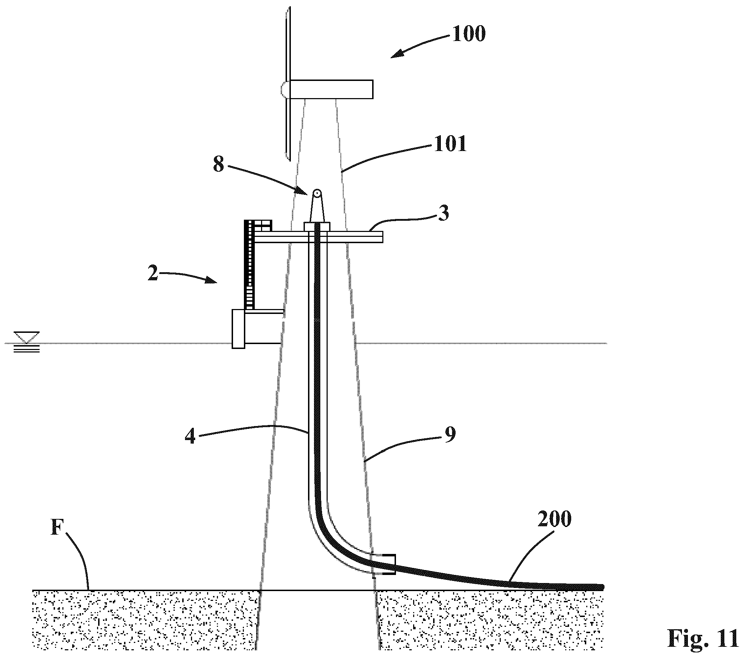

- Fig. 11 shows a further step of installation at sea of the assembly for recovering cables from seabeds, following the installation of a wind turbine; This is not according to the invention and is present for illustration purposes only;
- Fig. 12 shows a perspective view of a step of extending, on the marine seabed, an electrical cable to be recovered by means of the assembly, object of the present invention.

### Detailed description of a preferred embodiment

With reference to the enclosed drawings, reference number 1 overall indicates an assembly for recovering cables from seabeds, according to the present invention. In particular it is intended to be employed for recovering electrical cables from beds of seas, lakes, basins, etc. for the purpose of connecting an offshore wind turbine to a power grid.

For the sake of description simplicity, in the course of the present description reference will always and exclusively be made to the application at sea of such equipment; of course it is intended that such equipment can also be applied for recovering cables from beds F different from the marine seabed, such as the bed of a lake or of any other water basin.

The assembly 1, object of the present invention, comprises a foundation platform 2 for a wind turbine 100, and in particular for a wind turbine of offshore type. The aforesaid foundation platform 2 is fixed to a seabed F, in particular by means of a foundation portion 9, and is provided with a base plane 3 placed above the water level and from such base plane 3 a support pole 101 of the wind turbine 100 is adapted to be elevated. More in detail, in accordance with the enclosed figures, the foundation portion 9 of the foundation platform 2 supports the base plane 3 and is extended mainly along a substantially vertical direction between the base plane 3 itself and the seabed F. Advantageously, moreover, the aforesaid foundation portion 9 is provided with a closed perimeter wall, preferably with tubular form, and still more preferably frustoconical form.

According to the invention, moreover, the assembly 1 for recovering cables from seabeds comprises a duct 4, which is fixed to base plane 3 of the foundation platform 2 and is extended within the foundation platform 2 between the base plane 3 itself and the seabed F. In addition, the duct 4 is provided with a first access mouth 41 placed at the base plane 3 and with a second access mouth 42.

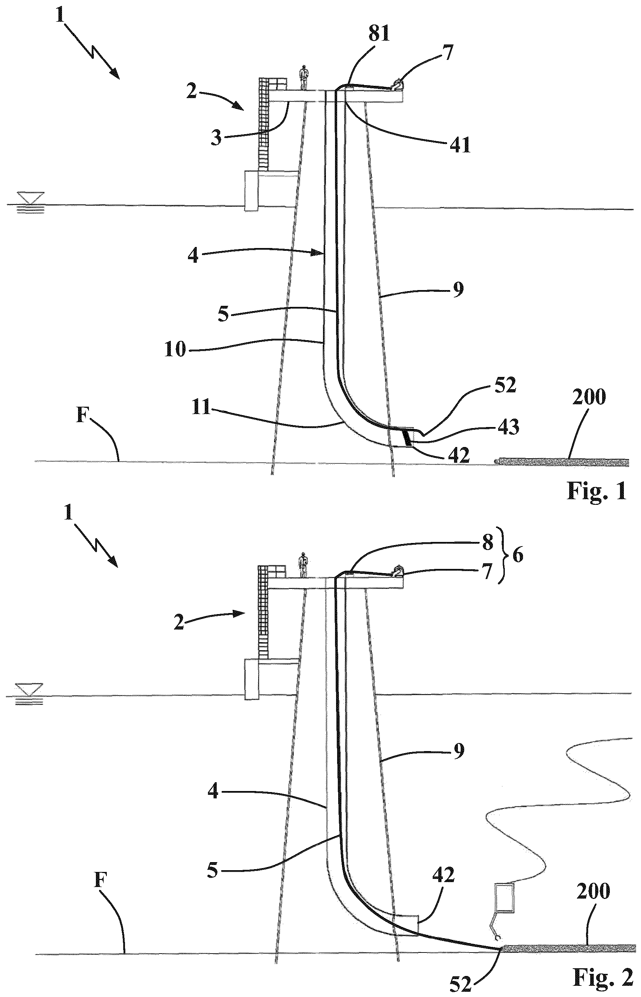

Advantageously, the duct 4 is provided with a closure body 43 (illustrated in figure 1) placed to close the second mouth 42, so as to prevent the water of the sea (and possibly sea flora and fauna) from entering into the duct 4 itself.

The present assembly 1 also comprises a recovery line 5 housed inside the duct 4. Such recovery line 5 is extended between a first end 51, susceptible of projecting beyond the first access mouth 41 of the duct 4, and a second end 52, susceptible of projecting beyond the second access mouth 42 of the duct 4 itself. In addition, the second end 52 of the recovery line 5 is intended to be connected to an electrical cable 200 to be recovered, which lies on the seabed F.

In particular, the recovery line 5 is advantageously provided with coupling means, which are placed at the second end 52 thereof and are susceptible of being coupled with a free end of the electrical cable 200. For example, the coupling means of the recovery line 5 comprise a carabiner which is susceptible of being coupled to a fixed ring at the free end of the electrical cable 200.

Preferably, such electrical cable 200 is a cable for the transmission of electrical energy of known type and for this reason not described in detail hereinbelow. Advantageously, moreover, the aforesaid electrical cable 200 lies on the seabed F in proximity to the foundation platform 2, available to be connected to the recovery line 5.

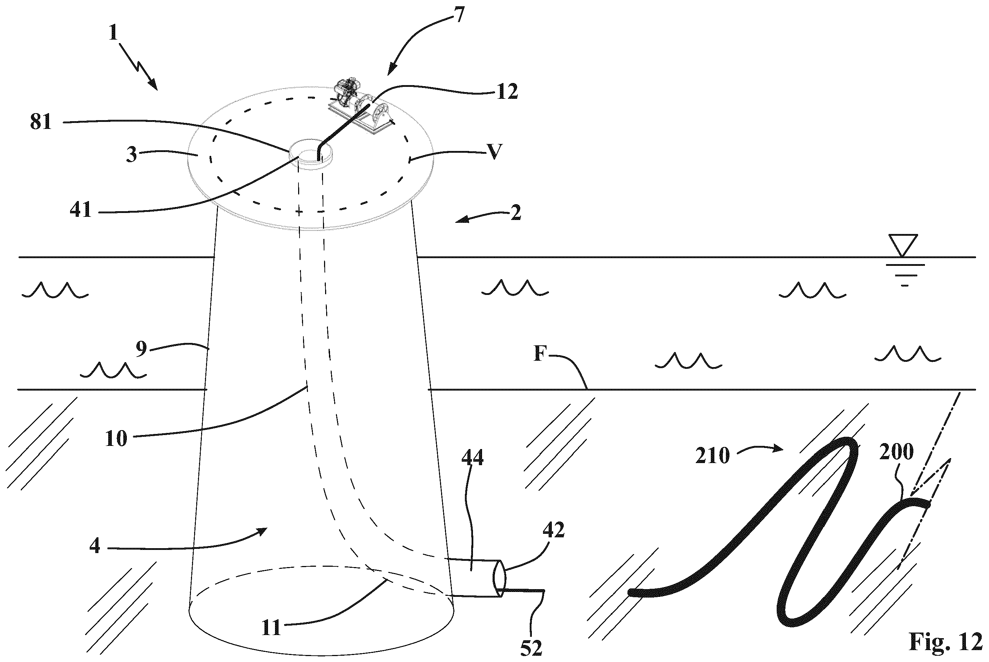

In accordance with the enclosed figure 12, the electrical cable 200 is intended to be laid on the seabed F in proximity to the foundation portion 9, achieving at least one loop 210. Of course the loops 210 illustrated schematically in figure 12 are intended to be laid on the seabed, even if the schematic example in perspective view does not allow a full appreciation thereof.

More in detail, as better described hereinbelow, the aforesaid loop 210 allows providing, on the seabed F, a quantity of electrical cable 200 at least equal to the length of the duct 4, so as to allow recovering such electrical cable 200 up to the base plane 3 of the foundation platform 2.

The present assembly 1 also comprises recovery means 6 connected to the recovery line 5 and susceptible of driving the electrical cable 200 (suitably connected to the recovery line 5) through the duct 4, up to the base plane 3 of the foundation platform 2.

According to the idea underlying the present invention, the duct 4 is rigid and non-deformable, for example made of steel, and preferably of steel that is resistant to sea water. In addition, the aforesaid duct 4 has an end section 44 that terminates with the second access mouth 42 and is placed substantially horizontally in order to receive the electrical cable 200 that lies on the seabed F.

According to the invention, moreover, the recovery means 6 of the present assembly 1 comprise a winding device 7, fixed to the base plane 3 of the foundation platform 2 and connectable to the first end 51 of the recovery line 5, and a guide device 8 adapted to guide the recovery line 5 itself between the first access mouth 41 of the duct 4 and the winding device 7

The aforesaid guide device 8 is constituted by a slide 81 fixed to the base plane 3 of the foundation platform 2 in proximity to the first access mouth 41 of the duct 4 and is adapted to be housed within the support pole 101 of the wind turbine 100.

The recovery assembly 1 thus conceived advantageously allows recovering the electrical cables 200 that lie on the seabed in an entirely safe manner, both for the operators who execute the recovery, and for the electrical cable 200, which does not risk being damaged during the recovery itself.

In particular, the rigid and non-deformable duct 4 is susceptible of acting as protection for the electrical cable 200 intended to be recovered and housed therein, and in particular is susceptible of preventing the electrical cable 200 from being deformed between the seabed and the base plane 3, for example due to marine currents.

Advantageously, moreover, the end section 44 of the duct 4 allows making the electrical cable 200 enter substantially tangentially with respect to the aforesaid end section 44, preventing the electrical cable 200 from being rubbed against the second access mouth 42, damaging it.

In accordance with the preferred embodiment illustrated in the enclosed figures, the aforesaid duct 4 is substantially shaped in the form of a "J" and is provided with a rectilinear section 10 and with an underlying curved section 11 (indicated in figure 1).

In particular, the rectilinear section 10 is extended starting from the first access mouth 41 substantially vertically within the foundation portion 9 of the foundation platform 2. The curved section 11 is extended along a circular sector substantially equal to a fourth of circumference and preferably terminates with the aforesaid end portion 44.

In particular, the aforesaid curved section 11 is extended preferably along a rigid angle equal to about 90° and is provided with a curvature radius sufficiently large to enable the electrical cable 200 to be housed within such curved section 11 without being damaged.

In accordance with the enclosed figures, moreover, the curved section 11 is placed to traverse the perimeter wall of the foundation portion 9, with the end portion 44 and the second access mouth 42 of the duct 4 placed externally with respect to the foundation platform 2 and preferably which lie on the seabed F. In this manner, the duct 4 substantially acts as a communication duct between the seabed F and the base plane 3 of the foundation platform 2.

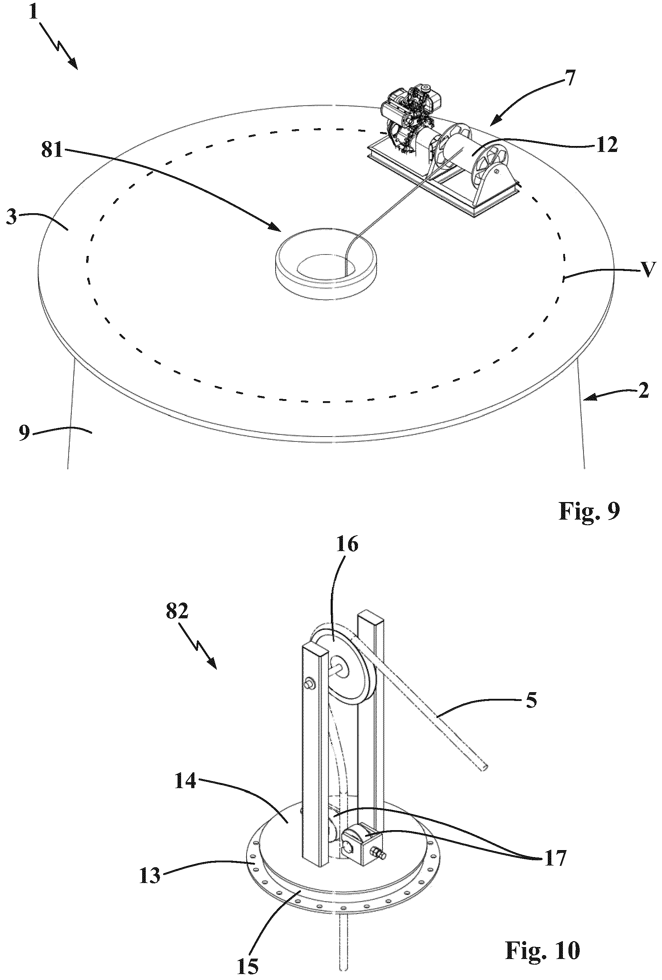

In accordance with the preferred embodiment illustrated in the enclosed figure 9, the winding device 7 of the recovery means 6 is preferably placed within the bulk volume V of the support pole 101 of the wind turbine 100 and is adapted to be housed within the support pole 101.

More in detail, the winding device 7 is preferably a hoist adapted to wind the recovery line 5, for example around a reel 12, in order to move the second end 52 of the recovery line 5 itself through the duct 4 towards the base plane 3 of the foundation platform 2. Of course, the winding device 7 can also be adapted to unwind the recovery line 5 in order to move its second end 52 away from the base plane 3 of the foundation platform 2.

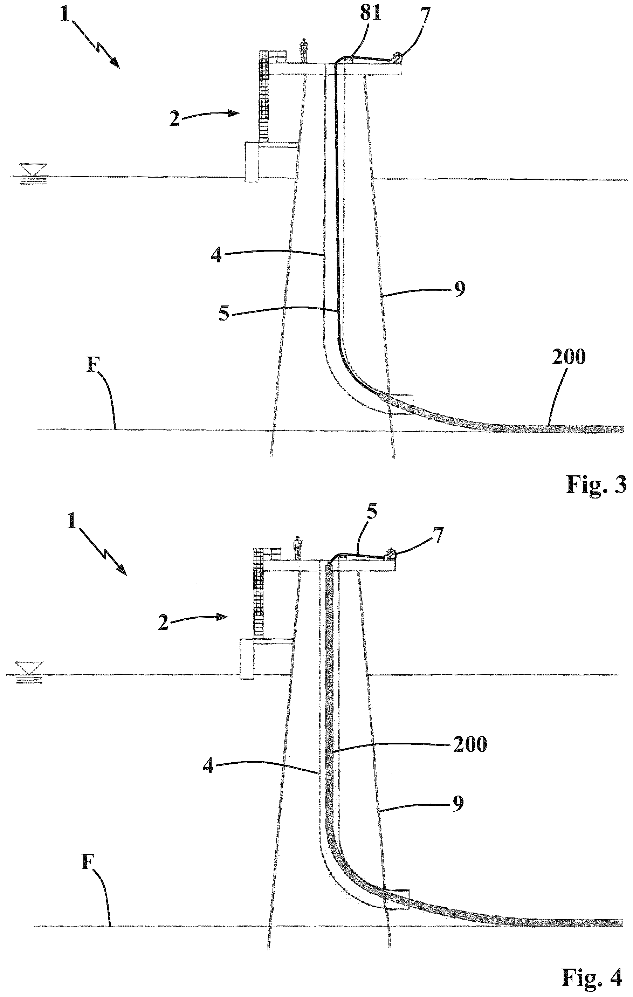

In accordance with the invention, as illustrated in the enclosed figures 1-4 and 9, the slide 81 of the guide device 8 is fixed to the first access mouth 41 of the duct 4 and is axially aligned with the latter.

According to the invention, the slide 81 is constituted by a tapered duct provided with a smaller section connected to the first access mouth 41 of the duct 4 and with a larger section projecting beyond the base plane 3 and beyond which the first end 51 of the recovery line 5 is susceptible of projecting. The aforesaid slide 81 is provided with a curved perimeter wall between its smaller section and its larger section so as to guide the recovery line 5 to gradually curve between the duct 4 and the winding device 7.

As indicated above, moreover, the aforesaid winding device 7 is preferably a hoist and is preferably connected to actuation means, such as an endothermic engine or an electric motor, which are also advantageously fixed to the base plane 3 of the foundation platform 2 and not illustrated in the enclosed figures.

In particular, the hoist of the winding device 7 and the actuation means connected thereto are suitably size in order to have a load capacity of about 4-5 tons, i.e. a recovery capacity of about 40-50 meters of recovery line 5 and of electrical cable 200, and a winding speed comprised between 1 and 10 m/min.

Advantageously, the present assembly 1 allows installing, directly in shipyards, the winding device 7 and the guide device 8 on the foundation platform 2. In other words, it allows fixing the hoist of the winding device 7, together with its actuation means and its slide 81, to the base plane 3 before the foundation platform 2 is installed at sea.

It is of course possible to fix the winding device 7 to the base plane 3 also during a step of installation at sea, without departing from the protective scope of the present patent. In particular, the aforesaid step of installation at sea is simpler and easier than the steps of installation of the cranes of known type, since the hoist of the winding device 7 and its actuation means are light and compact and easily unloadable on the base plane 3 of the foundation platform 2.

In addition, the aforesaid elements to be fixed to the base plane 3 are intended to remain fixed to the latter even once the recovery of the electrical cable 200 from the seabed F has been completed and they are intended to be housed within the support pole 101 of the wind turbine 100 after such pole has been installed.

Advantageously, therefore, the aforesaid recovery means 6 and the means for actuating the hoist do not require unloading other equipment on the foundation platform 2 in order to execute the recovery of the electrical cable 200 from the seabed F, nor do they require having to remove some equipment from the foundation platform 2 once the recovery of the electrical cable 200 has been completed.

In particular, the present assembly 1 only requires unloading personnel on the foundation platform 2 in order to actuate the hoist of the winding device 7 for recovering the electrical cable 200. Advantageously, therefore, the personnel unloading operations, possibly together with the fuel for supplying the hoist actuation means, can be executed in a simple manner and without involving large risks for the personnel itself, since there is no need to unload heavy equipment.

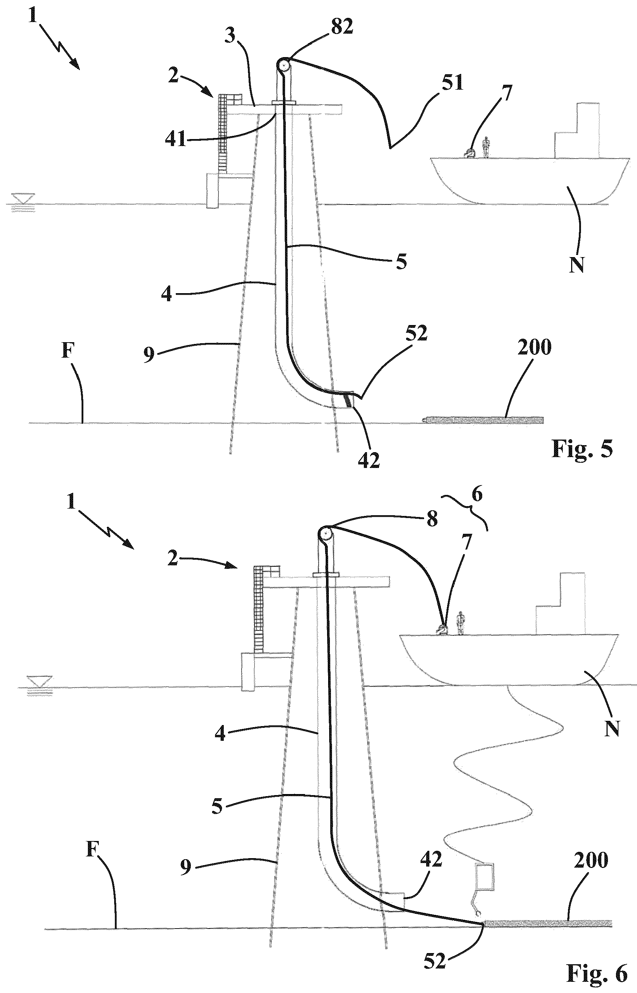

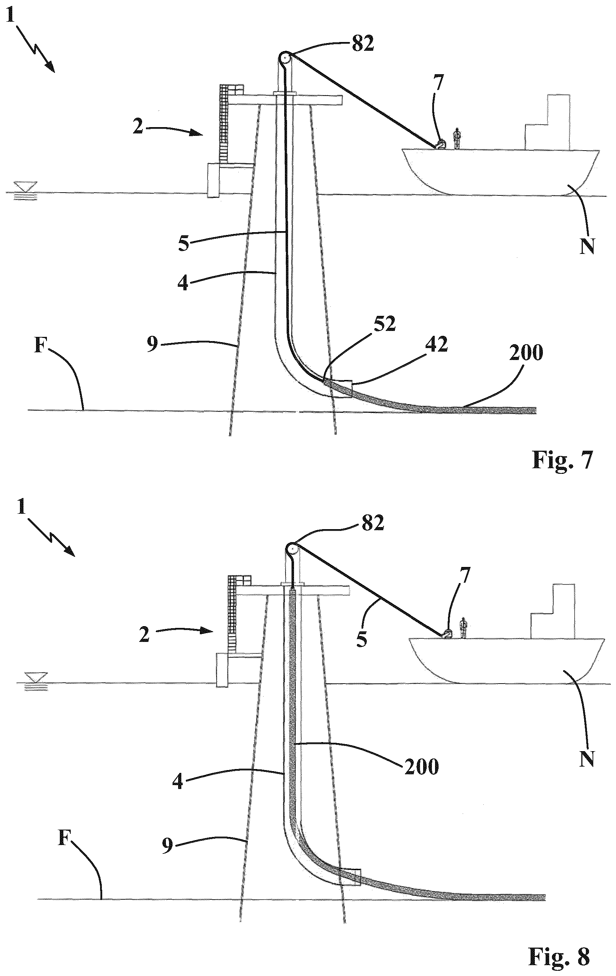

According to a second embodiment, which is not according to the invention and is present for illustration purposes only, in the enclosed figures 5-8 and 10, the winding device 7 of the recovery means 6 is fixed on a boat N that can be placed alongside the foundation platform 2.

In accordance with the aforesaid second embodiment of the assembly 1, only the guide device 8 of the recovery means 6 is fixed to the base plane 3 of the foundation platform 2, and in particular it is fixed within the bulk volume V of the support pole 101 of the wind turbine 100 and more preferably it is fixed to the first access mouth 41 of the duct 4, and is axially aligned with the latter as illustrated in the enclosed figures 5-8.

In such second embodiment, the guide device 8 of the recovery means 6 is advantageously constituted by a pulley 82, e.g. of the type illustrated in the enclosed figure 10.

More in detail, the pulley 82 is advantageously provided with a fixed base 13, fixed to the base plane 3 (e.g. by means of a plurality of bolts or welds), and with a movable base 14, which is rotatably mounted on the fixed base 13 and is susceptible of rotating with respect to the latter around a first rotation axis substantially parallel to the rectilinear section 10 of the duct 4, and in particular substantially vertical. Advantageously, in accordance with the enclosed figure 10, the fixed base 13 and the movable base 14 are rotatably connected to each other by means of a rotation ring 15. In accordance with the enclosed figure 10, moreover, the pulley 82 is provided with at least one guide disc 16, susceptible of rotating around a second rotation axis substantially perpendicular to the first rotation axis of the movable base 14. In addition, the guide disc 16 is provided with a circumferential groove susceptible of at least partially housing the recovery line 5 and adapted to guide the latter to curve between the duct 4 and the winding device 7.

Advantageously, the pulley 82 thus attained is susceptible of guiding the recovery line 5 between the first access mouth 41 of the duct 4 and the winding device 7 fixed to the boat N, and hence placed at a distance of several meters from the aforesaid first access mouth 41. Advantageously, moreover, due to the movable base 14, the pulley 82 is capable of guiding the recovery line 5 towards the winding device 7 fixed to the boat N independent of the position at which the boat N is placed alongside the foundation platform 2.

In accordance with the enclosed figure 10, moreover, the pulley 82 is provided with a pair of adjustable rollers 17, rotatably mounted on the movable base 14 with the recovery line 5 interposed and preferably placed in abutment against the latter.

More in detail, the two adjustable rollers 17 are advantageously idle and free to rotate around a third rotation axis substantially parallel to the second rotation axis of the guide disc 16, in particular driven by the movement of the recovery line 5. Advantageously, moreover, the two adjustable rollers 17 are susceptible of being moved close to or away from each other in order to adjust the tension exerted thereby on the recovery line 5, against which they are abutted.

Similar to the first embodiment described above, the winding device 7 of the second embodiment is preferably a hoist and is preferably connected to actuation means, such as an endothermic engine or an electric motor, also fixed to the boat N and not illustrated in the enclosed figures. Advantageously, moreover, also the hoist provided in the aforesaid second embodiment and the actuation means connected thereto are suitably sized in order to have a load capacity of about 4-5 tons, i.e. a recovery capacity of about 40-50 meters of recovery line 5 and of electrical cable 200, and a winding speed comprised between 1 and 10 m/min.

Advantageously, the second embodiment of the assembly 1 allows installing, directly in shipyards, only the pulley 82 on the base plane 3 of the foundation platform 2 and does not require unloading any personnel on the foundation platform 2 itself since it is sufficient that the personnel be on board the boat N where the winding device 7 is fixed. In operation, in order to recover the cable 200 from the seabed F, it is thus sufficient to place the boat N alongside the foundation platform 2, connecting the first end 51 of the recovery line 5 to the hoist of the winding device 7 and actuating the latter, without having to unload on the foundation platform.

Advantageously, in the step of installation in shipyards of the recovery line 5 on the foundation platform 2, the recovery line 5 is arranged with its first end 51 projecting beyond the base plane 3, in order to be easily recoverable by the personnel on board the boat N.

Advantageously, moreover, the pulley 82 of the second embodiment of the assembly 1 is intended to remain fixed to the base plane 3 of the foundation platform 2 even once the recovery of the electrical cable 200 from the seabed F has been completed and is intended to be housed within the support pole 101 of the wind turbine 100 after such pole has been installed. Advantageously, therefore, the aforesaid second embodiment of the assembly 1 does not require having to remove any equipment from the foundation platform 2 once the recovery of the electrical cable 200 has been completed.

Also forming the object of the present disclosure is a method for recovering cables from seabeds by means of an assembly of the above-described type and regarding which, for the sake of description simplicity, the same reference nomenclature will be employed.

The present method comprises a first step of installation in shipyards, which occurs in a shipyard on dry land, and thus not in water.

The aforesaid first step of installation provides for making, in shipyards, the foundation platform 2 and the rigid and non-deformable duct 4. In addition, it provides for fixing the first access mouth 41 of the duct 4 to the base plane 3 of the foundation platform 2 itself.

In addition, the first step of installation provides for housing the recovery line 5 inside the duct 4, in particular with the two ends of the recovery line 5 projecting from the two access mouths of the duct 4.

The first step of installation also provides for fixing, in shipyards, the guide device 8 of the recovery means 6 on the base plane 3 of the foundation platform 2 and of connecting it to the recovery line 5. In particular, as indicated above, the guide device 8 comprises the slide 81, which is advantageously fixed to the first access mouth 41 of the duct 4, as illustrated in figure 9.

The present method comprises a second step of installation at sea, which occurs at the point at which the wind turbine 100 is intended to be installed.

The aforesaid second step of installation provides for fixing the foundation platform 2 (with which the duct 4, the recovery line 5 and the guide device 8 were previously associated) on the seabed F. In particular, the aforesaid operation of fixing the foundation platform 2 is advantageously executed by means of processes of known type and therefore it will not be described in detail hereinbelow.

In addition, the second step of installation provides for extending the electrical cable 200 that lies on the seabed F in proximity to the second access mouth 42 of the duct 4, attaining at least one loop 210 on the seabed F, as illustrated in figure 12.

Subsequently, the second step of installation provides for connecting the second end 52 of the recovery line 5 to the electrical cable 200 that lies on the seabed F. In particular, the aforesaid operation of connecting the recovery line 5 to the electrical cable 200 is advantageously executed by scuba divers or by a suitable underwater vehicle (see the examples indicated in the enclosed figures 2 and 6).

Subsequently, the second step of installation provides for actuating the winding device 7 of the recovery means 6 in order to drive the electrical cable 200 to enter into the duct 4 through the second access mouth 42 substantially parallel to the seabed F and tangentially to the end section 44, so as to prevent bends of the electrical cable 200 at the second access mouth 42, and in order to drive the electrical cable 200 to rise through the duct 4 up to the base plane 3 of the foundation platform 2, to reduce the loop 210.

In particular, the loop 210 made on the seabed preferably has a length at least equal to the length of the duct 4. In this manner, during the recovery of the electrical cable 200 along the duct 4, the electrical cable 200 is not tensioned, thus preventing it from being damaged during such recovery.

More in detail, in accordance with the above-described feature of the invention, in which
the winding device 7 is fixed to the base plane 3 of the foundation platform 2, the present method provides for fixing the winding device 7 to the base plane 3 during the first step of installation in shipyards. Preferably, in such first step of installation, also the fixing of the actuation means of the winding device 7 to the base plane 3 is provided for.

Advantageously, moreover, in such first step of installation, it is also provided to connect the first end 51 of the recovery line 5 to the winding device 7, for example by fixing such first end 51 to the reel 12.

Advantageously, moreover, the second step of installation of the present method provides for unloading personnel on the foundation platform 2 in order to actuate the winding device 7, preferably previously fixed thereon in the first step of installation in the shipyard. Advantageously, such operation of unloading personnel is rather simple to carry out and substantially free of risk for the personnel itself, since the personnel that disembarks on the foundation platform 2 does not have to unload any other equipment, if not possible fuel for power supplying the actuation means of the winding device 7.

Of course, it is possible to fix the winding device 7 to the base plane 3 even during the second step of installation at sea.

Otherwise, in accordance with the above-described second embodiment, in which the winding device 7 is fixed to the boat N, the present method provides for fixing the winding device 7 to the boat N and not to the base plane 3 of the foundation platform 2. In addition, the second step of installation of the present method provides for placing the boat N alongside the foundation platform 2 and subsequently connecting the first end 51 of the recovery line 5 to the winding device 7 of the recovery means 6.

Advantageously, then, the second step of installation of the present method for recovering cables from seabeds by means of the second embodiment of the apparatus 1 does not provide for any operation of unloading personnel on the platform 2, further reducing the risks for the personnel itself, which actuates the winding device 7 directly from the boat N.

In accordance with such second embodiment, therefore, the second step of installation also provides for recovering the first end 51 of the recovery line 5 on the boat N. Advantageously, such recovery operation can be directly executed by the boat N itself, for example by means of arms projecting from the boat N.

Advantageously, the present method for recovering cables from seabeds subsequently also comprise a third step of installation at sea, which provides for mounting - on the base plane 3 of the foundation platform 2 - the wind turbine 100, with the guide device 8 of the recovery means 6 housed within the support pole 101 of the wind turbine 100. In other words, therefore, the present method does not provide for any step for disassembly of the guide device 8 from the base plane 3.

Following such third installation step, the present method advantageously also provides for electrically connecting the electrical cable 200, recovered in the second installation step, to the wind turbine 100, so as to transmit the electrical energy produced by the turbine 100 itself to an electrical transmission grid.

The assembly for recovering cables from seabeds and the method of installation thereof thus conceived therefore attain the pre-established objects.

## Claims

1. Assembly for recovering cables from a seabed, which comprises:
- a foundation platform (2) for a wind turbine (100), said foundation platform (2) being fixed to a seabed (F) and being provided with a base plane (3) placed above the water level, and from said base plane (3) a support pole (101) of the wind turbine (100) is adapted to be elevated;
- a duct (4), which is fixed to the base plane (3) of said foundation platform (2), is extended within said foundation platform (2) between said base plane (3) and the seabed (F) and is provided with a first access mouth (41) placed at said base plane (3) and with a second access mouth (42); wherein said duct (4) has an end section (44) that terminates with said second access mouth (42) and is placed substantially horizontally in order to receive the electrical cable (200) that lies on the seabed (F);
- a recovery line (5) housed inside said duct (4) and extended between a first end (51) susceptible of projecting beyond the first access mouth (41) of said duct (4) and a second end (52), susceptible of projecting beyond the second access mouth (42) of said duct (4) and intended to be connected to an electrical cable (200) to be recovered that lies on the seabed (F);
- recovery means (6) connected to said recovery line (5) and susceptible of driving the electrical cable (200) through said duct (4) up to the base plane (3) of said foundation platform (2);
wherein:
- said duct (4) is rigid and non-deformable;
- said recovery means (6) comprise:
- a winding device (7) fixed to the base plane (3) of said foundation platform (2) and connectable to the first end (51) of said recovery line (5);
- a guide device (8) constituted by a slide (81) fixed to the base plane (3) of said foundation platform (2) in proximity to the first access mouth (41) of said duct (4) and adapted to be housed within the support pole (101) of the wind turbine (100); said guide device (8) being adapted to guide said recovery line (5) between the first access mouth (41) of said duct (4) and said winding device (7);
wherein the slide (81) of said guide device (8) is fixed to the first access mouth (41) of said duct (4) and is axially aligned with said first access mouth (41);
wherein the slide (81) of the guide device (8) of said recovery means (6) is constituted by a tapered duct provided with:
- a smaller section connected to the first access mouth (41) of said duct (4); and
- a larger section projecting beyond said base plane (3) and beyond which the first end (51) of said recovery line (5) is susceptible of projecting;
wherein said slide (81) is provided with a curved perimeter wall between its smaller section and its larger section so as to guide said recovery line (5) to gradually curve between said duct (4) and said winding device (7).

2. Assembly for recovering cables from seabeds according to claim 1, **characterized in that** said duct (4) is substantially shaped in the form of a "J" and is provided with a rectilinear section (10) and with an underlying curved section (11) terminating with said end portion (44) and extended along a rigid angle equal to about 90°.

3. Assembly for recovering cables from seabeds according to any one of the preceding claims, **characterized in that** the winding device (7) of said recovery means (6) is a hoist adapted to wind said recovery line (5) around a reel (12).

## Patentansprüche

1. Anordnung zur Kabelbergung vom Meeresboden, die Folgendes umfasst:
- eine Fundamentplattform (2) für eine Windturbine (100), wobei die genannte Fundamentplattform (2) an einem Meeresboden (F) befestigt ist und mit einer Basisebene (3) ausgestattet ist, die oberhalb des Wasserspiegels positioniert ist, und ein Stützmast (101) der Windturbine (100) geeignet ist, von der genannten Basisebene (3) angehoben zu werden;
- einen Kanal (4), der an der Basisebene (3) der genannten Fundamentplattform (2) befestigt ist, innerhalb der genannten Fundamentplattform (2) zwischen der genannten Basisebene (3) und dem Meeresboden (F) verläuft und mit einer ersten Zugangsöffnung (41), die an der genannten Basisebene (3) positioniert ist, und mit einer zweiten Zugangsöffnung (42) ausgestattet ist; wobei der genannte Kanal (4) einen Endabschnitt (44) aufweist, der mit der genannten zweiten Zugangsöffnung (42) endet und im Wesentlichen horizontal positioniert ist, um das Elektrokabel (200) aufzunehmen, das auf dem Meeresboden (F) liegt;
- eine Bergungsleine (5), die im Inneren des genannten Kanals (4) untergebracht ist und zwischen einem ersten Ende (51), das geeignet ist, über die erste Zugangsöffnung (41) des genannten Kanals (4) hinauszuragen, und einem zweiten Ende (52), das geeignet ist, über die zweite Zugangsöffnung (42) des genannten Kanals (4) hinauszuragen, verläuft und dazu bestimmt ist, mit einem zu bergenden Elektrokabel (200) verbunden zu werden, das auf dem Meeresboden (F) liegt;
- Bergungsvorrichtungen (6), die mit der genannten Bergungsleine (5) verbunden und geeignet sind, das Elektrokabel (200) durch den genannten Kanal (4) bis zu der Basisebene (3) der genannten Fundamentplattform (2) zu führen;
wobei:
- der genannte Kanal (4) starr und nicht verformbar ist;
- die genannten Bergungsvorrichtungen (6) Folgendes umfassen:
- eine Aufwickelvorrichtung (7), die an der Basisebene (3) der genannten Fundamentplattform (2) befestigt ist und mit dem ersten Ende (51) der genannten Bergungsleine (5) verbindbar ist;
- eine Führungsvorrichtung (8), die aus einem Schieber (81) besteht, der an der Basisebene (3) der genannten Fundamentplattform (2) in der Nähe der ersten Zugangsöffnung (41) des genannten Kanals (4) befestigt ist und geeignet ist, in dem Stützmast (101) der Windturbine (100) untergebracht zu werden; wobei die genannte Führungsvorrichtung (8) geeignet ist, die genannte Bergungsleine (5) zwischen der ersten Zugangsöffnung (41) des genannten Kanals (4) und der genannten Aufwickelvorrichtung (7) zu führen;
wobei der Schieber (81) der genannten Führungsvorrichtung (8) an der ersten Zugangsöffnung (41) des genannten Kanals (4) befestigt und axial mit der genannten ersten Zugangsöffnung (41) ausgerichtet ist;
wobei der Schieber (81) der Führungsvorrichtung (8) der genannten Bergungsvorrichtungen (6) aus einem konischen Kanal besteht, der mit Folgendem ausgestattet ist:
- einem kleineren Abschnitt, der mit der ersten Zugangsöffnung (41) des genannten Kanals (4) verbunden ist; und
- einem größeren Abschnitt, der über die genannte Basisebene (3) hinausragt und geeignet ist, über den das erste Ende (51) der genannten Bergungsleine (5) hinauszuragen,
wobei der genannte Schieber (81) mit einer gekrümmten Umfangswand zwischen seinem kleineren Abschnitt und seinem größeren Abschnitt versehen ist, um die genannte Bergungsleine (5) so zu führen, dass sie sich allmählich zwischen dem genannten Kanal (4) und der genannten Aufwickelvorrichtung (7) krümmt.

2. Anordnung zum Bergen von Kabeln vom Meeresboden nach Anspruch 1, **dadurch gekennzeichnet, dass** der genannte Kanal (4) im Wesentlichen die Form eines "J" aufweist und mit einem geradlinigen Abschnitt (10) und einem darunter liegenden gekrümmten Abschnitt (11) versehen ist, der mit dem genannten Endabschnitt (44) endet und in einem starren Winkel von ca. 90° verläuft.

3. Anordnung zum Bergen von Kabeln vom Meeresboden nach einem beliebigen der vorangegangenen Ansprüche, **dadurch gekennzeichnet, dass** die Aufwickelvorrichtung (7) der genannten Bergungsvorrichtungen (6) eine Winde ist, die geeignet ist, die genannte Bergungsleine (5) um eine Trommel (12) zu wickeln. wickelndie. wickeln.

## Revendications

1. Ensemble de récupération de câbles sur un fond marin, comprenant :
- une plate-forme de fondation (2) pour une éolienne (100), ladite plate-forme de fondation (2) étant fixée à un fond marin (F) et pourvue d'un plan de base (3) placé au-dessus du niveau de l'eau, et à partir dudit plan de base (3) un poteau de support (101) de l'éolienne (100) est adapté pour être élevé ;
- un conduit (4), qui est fixé au plan de base (3) de ladite plate-forme de fondation (2), s'étend à l'intérieur de ladite plate-forme de fondation (2) entre ledit plan de base (3) et le fond marin (F) et est pourvu d'une première bouche d'accès (41) placée au niveau dudit plan de base (3) et d'une seconde bouche d'accès (42) ; où ledit conduit (4) a une section d'extrémité (44) qui se termine par ladite seconde bouche d'accès (42) et est placée de façon sensiblement horizontale afin de recevoir le câble électrique (200) qui se trouve sur le fond marin (F) ;
- une ligne de récupération (5) logée à l'intérieur dudit conduit (4) et s'étendant entre une première extrémité (51) susceptible de faire saillie au-delà de la première bouche d'accès (41) dudit conduit (4) et une seconde extrémité (52), susceptible de faire saillie au-delà de seconde bouche d'accès (42) dudit conduit (4) et destinée à être reliée à un câble électrique (200) à récupérer qui se trouve sur le fond marin (F) ;
- des moyens de récupération (6) reliés à ladite ligne de récupération (5) et susceptibles de conduire le câble électrique (200) à travers ledit conduit (4) jusqu'au plan de base (3) de ladite plate-forme de fondation (2) ;
où :
- ledit conduit (4) est rigide et indéformable ;
- lesdits moyens de récupération (6) comprennent :
- un dispositif d'enroulement (7) fixé au plan de base (3) de ladite plate-forme de fondation (2) et pouvant être relié à la première extrémité (51) de ladite ligne de récupération (5) ;
- un dispositif de guidage (8) constitué d'une glissière (81) fixée au plan de base (3) de ladite plate-forme de fondation (2) à proximité de la première bouche d'accès (41) dudit conduit (4) et adaptée pour être logée à l'intérieur du poteau de support (101) de l'éolienne (100) ; ledit dispositif de guidage (8) étant adapté pour guider ladite ligne de récupération (5) entre la première bouche d'accès (41) dudit conduit (4) et ledit dispositif d'enroulement (7) ;
où la glissière (81) dudit dispositif de guidage (8) est fixée à la première bouche d'accès (41) dudit conduit (4) et est alignée axialement avec ladite première bouche d'accès (41) ;
où la glissière (81) du dispositif de guidage (8) desdits moyens de récupération (6) est constituée d'un conduit conique pourvu de :
- une section plus petite reliée à la première bouche d'accès (41) dudit conduit (4) ; et
- une section plus grande faisant saillie au-delà dudit plan de base (3) et au-delà duquel la première extrémité (51) de ladite ligne de récupération (5) est susceptible de faire saillie ;
où ladite glissière (81) est pourvue d'une paroi périphérique incurvée entre sa plus petite section et sa plus grande section de manière à guider ladite ligne de récupération (5) pour qu'elle s'incurve progressivement entre ledit conduit (4) et ledit dispositif d'enroulement (7).

2. Ensemble de récupération de câbles sur des fonds marins selon la revendication 1, **caractérisé par** en ce que ledit conduit (4) est sensiblement en forme de «J» et est pourvu d'une section rectiligne (10) et d'une section courbe sous-jacente (11) se terminant par ladite partie d'extrémité (44) et s'étendant le long d'un angle rigide égal à environ 90°.

3. Ensemble de récupération de câbles sur des fonds marins selon l'une quelconque des revendications précédentes, **caractérisé en ce que** le dispositif d'enroulement (7) desdits moyens de récupération (6) est un treuil adapté pour enrouler ladite ligne de récupération (5) autour d'une bobine (12).
